# EUROPÄISCHE PATENTSCHRIFT

(11) **EP 2 657 059 B1**
(45) Veröffentlichungstag und Bekanntmachung des Hinweises auf die Patenterteilung: **08.08.2018**
(21) Anmeldenummer: 12165358.8
(22) Anmeldetag: 24.04.2012
(51) Int. Cl.: B60K 17/04, B60K 17/36, F16H 57/08

(54) **Antriebsvorrichtung für Tandemachsen**
Drive device for tandem axles
Dispositif d'entraînement pour essieu tandem

(43) Veröffentlichungstag der Anmeldung: 30.10.2013
(73) Patentinhaber: NAF Neunkirchener Achsenfabrik AG, 91077 Neunkirchen (DE)
(72) Erfinder: Rauh, Thomas, 91077 Kleinsendelbach (DE); Heinlein, Jürgen, 91077 Neunkirchen (DE); Hauswald, Alexander, 85232 Unterbachern (DE); Stadler, Jürgen, 80995 München (DE)
(74) Vertreter: Hofstetter, Schurack & Partner

(56) Entgegenhaltungen:
- EP-A1- 2 072 863
- EP-B1- 0 520 389
- EP-B1- 1 902 891
- US-A- 4 560 018
- US-A1- 2009 088 283

## Beschreibung

Die Erfindung betrifft eine Antriebsvorrichtung für Tandemachsen gemäß dem Oberbegriff des Patentanspruchs 1.

Derartige Antriebsvorrichtungen sind der gattungsgemäßen EP 1 902 891 B1 sowie der EP 0 520 389 B1 als bekannt zu entnehmen. Diese Antriebsvorrichtung für Tandemachsen eines Fahrzeugs, insbesondere einer selbstfahrenden Arbeitsmaschine, umfasst einen an einem Rahmen des Fahrzeugs angeordneten Achsträger, einen am Achsträger relativ zu diesem drehbar gelagerten Tandemkasten, wenigstens eine Antriebswelle und wenigstens ein Doppelplanetengetriebe. Über das Doppelplanetengetriebe ist ein Drehmoment von der Antriebswelle auf einen Tandemachsantrieb übertragbar, sodass dadurch ein Vorderrad und ein Hinterrad der Tandemachse angetrieben werden können.

Das Doppelplanetengetriebe umfasst ein erstes Hohlrad, welches mit dem Achsträger zumindest mittelbar verbunden ist. Ferner umfasst das Doppelplanetengetriebe wenigstens ein mit dem ersten Hohlrad über jeweilige Verzahnungen im Eingriff stehendes, erstes Planetenrad, ein mit dem Tandemkasten zumindest mittelbar verbundenes, zweites Hohlrad und wenigstens ein mit dem zweiten Hohlrad über jeweilige Verzahnungen im Eingriff stehendes und mit dem ersten Planetenrad über einen Planetenbolzen gekoppeltes, zweites Planetenrad. Die Planetenräder sind über ihren gemeinsamen Planetenbolzen an einem Trabantenkorb des Doppelplanetengetriebes gelagert. Der Trabantenkorb wird üblicherweise auch als Stegwelle bezeichnet.

Die EP 2 072 863 A1 offenbart einen Planetenträger einer Planetenstufe, wobei der Planetenträger eine Drehgestellplatte aufweist, an deren beiden Seiten Planetenräder anbringbar sind. Der Planetenträger mit seiner Drehgestellplatte ist als ein monolithisches Teil ausgeführt. Der Planetenträger kann in der Getriebeeinheit einer Windenergieanlage angebracht sein.

Die US 4 560 018 A offenbart einen Antriebsmechanismus zum Drehen eines Paares von Tandemradanordnungen, die an einem mittig schwenkbaren Tandemantriebsgehäuse gelagert sind. Ein fugenloser elastomerer Riemen erstreckt sich um die Radanordnungen herum, die von zwei Ketten angetrieben werden, die sich über entsprechende Kettenräder, welche in dem Tandemantriebsgehäuse enthalten sind, mitgenommen werden. Ein Planetengetriebe ist wirksam, um beide Ketten mit einer Differentialwirkung anzutreiben, um den Einfluss der Riemenbelastung auf die Ketten zu minimieren. Der Planetenradsatz und die Kettenräder sind so konstruiert, dass sie ein größeres Drehmoment an die Hinterradanordnung liefern als die Vorderradanordnung durch die Ketten.

Die US 2009/088283 A1 offenbart ein Getriebe, bei dem ein erstes Zahnrad und ein zweites Zahnrad an einem Ende einer Welle befestigt sind, wobei das zweite Zahnrad in das erste Zahnrad eingreift. Ein Kegelrad ist drehbar auf der Welle gelagert und steht mit einem Krafteingangszahnrad in Eingriff. Eine Nabe ist an dem Kegelrad für eine konzentrische Drehung um die Welle befestigt; die Nabe hat einen verzahnten äußeren Abschnitt. Ein Planetenradsatz mit einem Sonnenrad und einem Träger ist konzentrisch um den mit Keilnuten versehenen äußeren Abschnitt der Nabe angeordnet. Ein Keilprofil ist an einem gegenüberliegenden Ende der Welle befestigt. Eine Kragenanordnung umfasst einen ersten und einen zweiten Kragen, die jeweils Innenzähne und Außenzähne aufweisen. Der erste Kragen und der zweite Kragen sind axial miteinander gekoppelt und unabhängig relativ zueinander drehbar, und die Kragenanordnung greift gleitbar in den Keilprofilabschnitt und den äußeren Keilprofilabschnitt ein.

Tandemachsen oder Bogie-Achsen können den Nachteil aufweisen, dass sie sich abhängig von Übersetzungsverhältnissen und geometrischen Verhältnissen mehr oder weniger aufrichten, wenn über die Antriebswelle ein Drehmoment eingeleitet wird. Dadurch ergibt sich eine ungleichmäßige Verteilung der Radlast zwischen dem Vorder- und dem Hinterrad, die an jeweiligen Enden einer Achsschwinge der Tandemachse angeordnet sind. Daher kommt es vor, dass zumindest eines der Räder die Bodenhaftung verliert bzw. der Bodendruck stark reduziert wird. Da die beschriebenen Tandemachsen hauptsächlich in Forstmaschinen, Muldenkippern, Gradern und dergleichen Arbeitsmaschinen zum Einsatz kommen, die insbesondere in unwegsamem Gelände operieren, führt dies zu deutlichen Einschränkungen während des Betriebs des entsprechenden Fahrzeugs und zu unterschiedlichem Reifenverschleiß.

Die genannten Antriebsvorrichtungen wirken nun diesem Aufstelleffekt entgegen, sodass er vermieden oder zumindest gering gehalten werden kann. So können die im Zusammenhang mit dem Aufstelleffekt geschilderten Nachteile vermieden werden. Ein gewisses Aufstellen der Tandemachse kann jedoch ermöglicht werden, um beispielsweise Hindernisse überfahren zu können. Es hat sich jedoch gezeigt, dass die genannten Antriebsvorrichtungen hinsichtlich ihrer Kosten und ihres Gewichts verbesserungswürdig sind.

Es ist daher Aufgabe der vorliegenden Erfindung, eine Antriebsvorrichtung der eingangs genannten Art derart weiterzuentwickeln, dass die Antriebsvorrichtung ein geringeres Gewicht und geringere Kosten aufweist.

Diese Aufgabe wird durch eine Antriebsvorrichtung mit den Merkmalen des Patentanspruchs 1 gelöst. Vorteilhafte Ausgestaltungen mit zweckmäßigen Weiterbildungen der Erfindung sind in den übrigen Patentansprüchen angegeben.

Eine solche Antriebsvorrichtung für Tandemachsen eines Fahrzeugs, insbesondere einer selbstfahrenden Arbeitsmaschine, umfasst einen zumindest mittelbar an einem Rahmen des Fahrzeugs angeordneten Achsträger sowie einen am rahmenfesten Achsträger relativ zum Achsträger drehbar gelagerten Tandemkasten. Die Antriebsvorrichtung umfasst ferner wenigstens eine Antriebswelle und wenigstens ein Doppelplanetengetriebe. Über das Doppelplanetengetriebe ist ein Drehmoment bzw. sind Drehmomente von der Antriebswelle auf einen Tandemachsantrieb übertragbar, sodass dadurch ein Vorderrad und ein Hinterrad der Tandemachse über die Antriebswelle angetrieben werden können. Das Doppelplanetengetriebe umfasst ein mit dem Achsträger verbundenes, erstes Hohlrad, wenigstens ein mit dem ersten Hohlrad über jeweilige Verzahnungen im Eingriff stehendes, erstes Planetenrad, ein mit dem Tandemkasten verbundenes, zweites Hohlrad und mindestens ein mit dem zweiten Hohlrad über jeweilige Verzahnungen im Eingriff stehendes, zweites Planetenrad. Die Planetenräder sind dabei über einen Planetenbolzen miteinander gekoppelt und über den Planetenbolzen an einem Trabentenkorb, welcher üblicherweise auch als Stegwelle bezeichnet wird, des Doppelplanetengetriebes gelagert. Das Doppelplanetengetriebe umfasst wenigstens ein zweites Planetenradpaar mit einem mit dem ersten Hohlrad im Eingriff stehenden, dritten Planetenrad und mit einem mit dem zweiten Hohlrad im Eingriff stehenden und mit dem dritten Planetenrad über einen zweiten Planetenbolzen des zweiten Planetenradpaares gekoppelten, vierten Planetenrad,

Erfindungsgemäß ist der Trabantenkorb einstückig ausgebildet, wodurch das Doppelplanetengetriebe und somit die Antriebsvorrichtung eine geringere Teileanzahl und damit einhergehend ein geringeres Gewicht sowie geringere Kosten aufweisen. Infolge der einstückigen oder einteiligen Ausgestaltung des Trabantenkorbs kann auch die maschinelle Bearbeitung gering gehalten werden, sodass die Antriebsvorrichtung zeit- und kostengünstig herstellbar ist. Durch die Einstückigkeit bzw. Einteiligkeit kann auch die Gefahr vermieden werden, dass sich zwei miteinander verbundene Trabantenkorbhälften bei sehr hoher Belastung oder Überbelastung des Doppelplanetengetriebes zueinander verdrehen. Des Weiteren weist der Trabantenkorb eine besonders hohe Steifigkeit auf, woraus ein exakter Lauf der Planetenräder und ihrer Verzahnungen resultiert. Dies kommt einem geringen Verschleiß und somit einer hohen Lebensdauer des Doppelplanetengetriebes zugute.

Die Antriebsvorrichtung weist weiterhin den Vorteil auf, dass dem eingangs genannten Aufstelleffekt der Tandemachse entgegengewirkt werden kann. Durch die relativ zum Achsträger drehbare Lagerung des Tandemkastens und des mit diesem verbundenen, zweiten Hohlrads am Achsträger ist ein Freiheitsgrad des Doppelplanetengetriebes dargestellt, sodass dem Aufstelleffekt beispielsweise ohne aktives Zutun mittels eines Stellglieds selbsttätig entgegengewirkt werden kann.

Weiterhin sind das erste und das zweite Planetenrad und der Planetenbolzen einem ersten Planetenradpaar zugeordnet, wobei das dritte und vierte Planetenrad über den zweiten Planetenbolzen an dem einstückigen Trabantenkorb gelagert sind und wobei ein den Planetenradpaaren gemeinsames und in axialer Richtung zwischen den Planetenrädern des jeweiligen Planetenradpaares angeordnetes, einstückig ausgebildetes Anlaufelement zum axialen Abstützen der Planetenräder des jeweiligen Planetenradpaares vorgesehen ist. Die jeweiligen, auf die Planetenräder der Planetenradpaare wirkenden Belastungen können durch das Vorsehen von wenigstens zwei Planetenradpaaren gering gehalten werden. Darüber hinaus können die auf das Doppelplanetengetriebe wirkenden Belastungen im Wesentlichen gleichmäßig auf die Planetenradteile verteilt werden, was einem nur sehr geringen Verschleiß und somit einer hohen Lebensdauer des Doppelplanetengetriebes zugutekommt. Außerdem kann durch die Verwendung von wenigstens zwei Planetenradpaaren, welche auch als Planetenradsätze bezeichnet werden, auf eine Lagerung des Sonnenrads bzw. einer mit dem Sonnenrad verbundenen Sonnenradwelle verzichtet werden, weil sich die Zahnkräfte auf die Sonnenradwelle in radialer Richtung ausgleichen. Ein nur geringer Montagaufwand ist geschaffen, indem das den Planetenradpaaren gemeinsame und in axialer Richtung zwischen den Planetenrädern des jeweiligen Planetenradpaares angeordnete Anlaufelement zum axialen Abstützen der Planetenräder des jeweiligen Planetenradpaares vorgesehen ist. An dem Anlaufelement können sich die entsprechenden Planetenräder des Planetenradpaares in axialer Richtung, insbesondere gegenseitig, abstützen. Es hat sich weiterhin als vorteilhaft gezeigt, dass das den Planetenradpaaren gemeinsame Anlaufelement einstückig ausgebildet ist, sodass die Teileanzahl nur sehr gering ist.

In vorteilhafter Ausgestaltung der Erfindung ist der einstückig ausgebildete Trabantenkorb als Gussbauteil, insbesondere als Sandgussbauteil, ausgebildet. Der Trabantenkorb ist somit im Rahmen eines Gießverfahrens, insbesondere eines Sandgussverfahrens, besonders zeit- und kostengünstig herstellbar. Dabei können auch anderweitige Gussverfahren zum Herstellen des Trabantenkorbs Verwendung finden

Bei einer weiteren vorteilhaften Ausführungsform der Erfindung ist der Trabantenkorb aus einem metallischen Werkstoff, insbesondere aus einer Metalllegierung, gebildet. Der Trabantenkorb weist dadurch eine hohe Steifigkeit und Festigkeit auf. Um das Gewicht des Trabantenkorbs gering zu halten, kann der Trabantenkorb aus einem Leichtmetall wie beispielsweise Aluminium, insbesondere einer Leichtmetalllegierung, insbesondere einer Aluminiumlegierung, gebildet sein.

Das Doppelplanetengetriebe umfasst in einer Ausführungsform ein zumindest mit dem ersten Planetenrad über jeweilige Verzahnungen im Eingriff stehendes, erstes Sonnenrad, über welches das Drehmoment bzw. die Drehmomente von der Antriebswelle in das Doppelplanetengetriebe eingeleitet werden können. Ferner umfasst dabei das Doppelplanetengetriebe ein zweites Sonnenrad, welches zumindest mit dem zweiten Planetenrad über jeweilige Verzahnungen im Eingriff steht und über welches das Drehmoment bzw. die Drehmomente von dem Doppelplanetengetriebe abgeführt und in den Tandemachsantrieb eingeleitet werden können. Zum Abstützen der Sonnenräder in axialer Richtung des Doppelplanetengetriebes ist beispielsweise wenigstens ein weiteres Anlaufelement vorgesehen, welches in axialer Richtung zwischen den Sonnenrädern angeordnet ist.

Bei einer weiteren vorteilhaften Ausführungsform der Erfindung steht das erste Sonnenrad im Eingriff mit dem ersten Planetenrad und mit dem dritten Planetenrad. Das koaxial zum ersten Sonnenrad angeordnete, zweite Sonnenrad steht dabei mit dem zweiten und mit dem vierten Planetenrad über jeweilige Verzahnungen im Eingriff.

Zur Realisierung eines nur sehr geringen Montageaufwands des Doppelplanetengetriebes ist das den Planetenpaaren gemeinsame und zumindest teilweise in axialer Richtung zwischen den Planetenrädern des jeweiligen Planetenradpaares angeordnete Anlaufelement auch zumindest teilweise in axialer Richtung zwischen den Sonnenrädern angeordnet und dient auch zum axialen Abstützen der Sonnenräder. Mit anderen Worten ist das weitere Anlaufelement zwischen den Sonnenrädern einstückig mit dem den Planetenradpaaren gemeinsamen, ersten Anlaufelement ausgebildet.

In weiterer, vorteilhafter Ausgestaltung der Erfindung umfasst das Doppelplanetengetriebe zusätzlich zu dem ersten und dem zweiten Planetenradpaar ein drittes Planetenradpaar mit einem mit dem ersten Hohlrad über jeweilige Verzahnungen im Eingriff stehenden, fünften Planetenrad und einem mit dem zweiten Hohlrad über jeweilige Verzahnungen im Eingriff stehenden sechsten Planetenrad, wobei das sechste Planetenrad mit dem fünften Planetenrad über einen dritten Planetenbolzen des dritten Planetenradpaares gekoppelt ist. Dabei sind auch das fünfte und das sechste Planetenrad über den dritten Planetenbolzen an dem einstückigen Trabantenkorb gelagert. Werden die wenigstens drei Planetenradpaare verwendet, so können dadurch die auf das Doppelplanetengetriebe wirkenden Belastungen besonders gering gehalten und sehr gleichmäßig verteilt werden, sodass das Doppelplanetengetriebe hinsichtlich seines Bauraumbedarfs nur sehr klein ausgestaltet werden kann. Vorzugsweise umfasst das Doppelplanetengetriebe an Planetenradpaaren höchstens die drei Planetenradpaare, was zu einem geringen Montageaufwand und zu einem geringen Bauraumbedarf des Doppelplanetengetriebes führt.

Umfasst das Doppelplanetengetriebe die wenigstens drei Planetenradpaare, so hat es sich als vorteilhaft gezeigt, wenn jeweilige Drehachsen, um welche die Planetenräder des jeweiligen Planetenradpaares drehbar sind, in Umfangsrichtung des Trabantenkorbs gleichmäßig verteilt angeordnet sind. Mit anderen Worten sind die Planetenradpaare bzw. die Drehachsen in Umfangsrichtung des Trabantenkorbs paarweise um den im Wesentlichen gleichen Winkelbetrag voneinander beabstandet. Drehachsen erstrecken sich dabei durch einen jeweiligen Eckpunkt eines gleichseitigen, gedachten, Dreiecks. Dadurch können die Belastungen besonders gleichmäßig verteilt werden, sodass die Gefahr von lokalen Überbelastungen sowie von ungleichmäßigem Verschleiß zumindest gering gehalten werden kann. Ferner können sich hierbei radiale Kraftkomponenten der Zahnkräfte ausgleichen, sodass auf eine Lagerung der Sonnenradwelle verzichtet werden kann.

Zur Darstellung einer besonders gleichmäßigen Lastverteilung bei gleichzeitiger Realisierung eines nur geringen Bauraumbedarfs hat es sich als vorteilhaft gezeigt, wenn der Trabantenkorb des die wenigstens drei Planetenradpaare umfassenden Doppelplanetengetriebes einen Querschnitt aufweist, der im Wesentlichen als gleichschenkliges, insbesondere gleichseitiges, Dreieck oder als Reuleaux-Dreieck ausgebildet ist. Um Belastungsspitzen zu vermeiden, sind vorzugsweise Ecken des gleichschenkligen oder gleichseitigen Dreiecks oder des Reuleaux-Dreiecks abgerundet.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigen
- Fig. 1: eine schematische Schnittansicht einer Antriebsvorrichtung für Tandemachsen eines Fahrzeugs, insbesondere einer selbstfahrenden Arbeitsmaschine;
- Fig. 2: eine schematische Perspektivansicht eines einstückigen Trabantenkorbs eines Doppelplanetengetriebes der Antriebsvorrichtung gemäß Fig. 1 mit einer perspektivischen und schematischen Explosionsdarstellung eines Planetenradpaares, welches an dem Trabantenkorb zu lagern ist;
- Fig. 3: eine schematische Perspektivansicht des Trabantenkorbs gemäß Fig. 2, an welchem drei Planetenradpaare gelagert sind; und
- Fig. 4: eine schematische Perspektivansicht einer weiteren Ausführungsform des einstückigen Trabantenkorbs gemäß Fig. 2 und Fig. 3, an welchem vier Planetenradpaare zu lagern sind, wobei zwei der Planetenradpaare in schematischer und perspektivischer Explosionsansicht dargestellt sind.

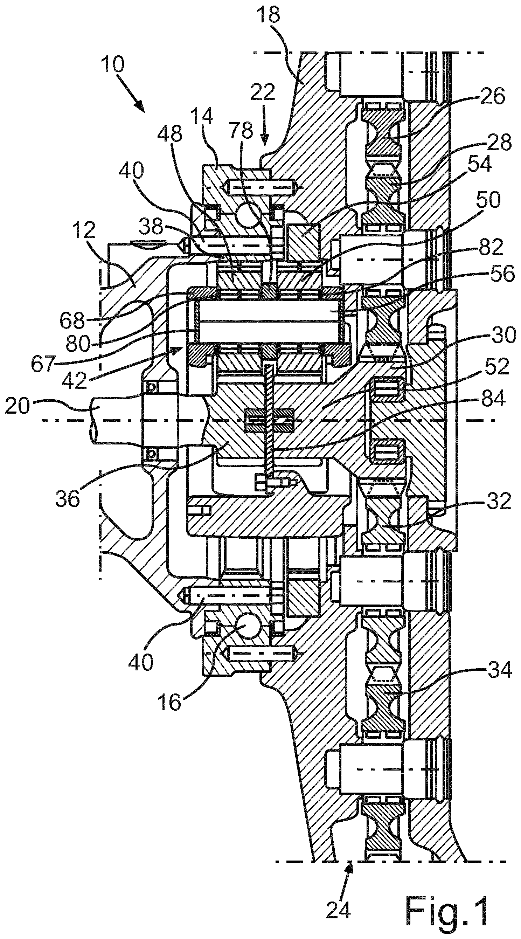

Fig. 1 zeigt eine Antriebsvorrichtung 10 für eine Tandemachse eines Fahrzeugs, insbesondere einer selbstfahrenden Arbeitsmaschine. Das Fahrzeug weist einen nicht dargestellten Rahmen auf, an welchem ein Achsträger 12 zumindest mittelbar angeordnet ist. Mit anderen Worten ist der Achsträger 12 rahmenfest. An dem Achsträger 12 ist über einen Kugeldrehkranz 14 und einem entsprechenden Kugellager 16 ein Tandemkasten 18 relativ zum Achsträger 12 drehbar gelagert.

Die Antriebsvorrichtung 10 umfasst eine Antriebswelle 20, welche von einem nicht dargestellten Antriebsaggregat des Fahrzeugs antreibbar ist. Dazu wird von dem Antriebsaggregat ein Drehmoment bzw. werden Drehmomente auf die Antriebswelle 20 übertragen. Die Antriebsvorrichtung 10 umfasst auch ein Doppelplanetengetriebe 22, über welches das Drehmoment von der Antriebswelle 20 auf einen Tandemachsantrieb 24 übertragen wird. Der Tandemachsantrieb 24 umfasst eine Mehrzahl von Stirnrädern 26, 28, 30, 32, 34, welche über jeweilige Verzahnungen miteinander im Eingriff stehen und über welche ein Vorderrad und ein Hinterrad der Tandemachse antreibbar sind.

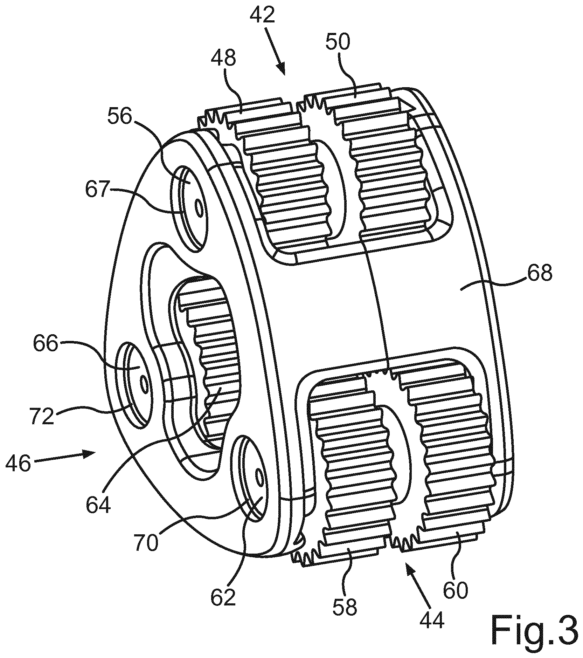

Das Doppelplanetengetriebe 22 umfasst ein erstes Sonnenrad 36 sowie ein erstes, innenverzahntes Hohlrad 38, welches mit dem Achsträger 12 mittels Schrauben 40 verbunden und somit rahmenfest ist. Wie in Zusammenschau mit Fig. 3 erkennbar ist, umfasst das Doppelplanetengetriebe 22 drei Planetenradpaare 42, 44, 46, wobei in Fig. 1 das erste Planetenradpaar 42 erkennbar ist. Ein erstes Planetenrad 48 des ersten Planetenradpaares 42 steht dabei über jeweilige Verzahnungen im Eingriff mit dem ersten Sonnenrad 36 sowie dem ersten Hohlrad 38. Ein zweites Planetenrad 50 des ersten Planetenradpaares 42 steht über jeweilige Verzahnungen im Eingriff mit einem zweiten Sonnenrad 52 des Doppelplanetengetriebes 22. Das zweite Sonnenrad 52 ist dabei mit dem Stirnrad 30 verbunden. Das zweite Planetenrad 50 steht ferner über jeweilige Verzahnungen im Eingriff mit einem innenverzahnten, zweiten Hohlrad 54 des Doppelplanetengetriebes 22. Dabei ist das zweite Hohlrad 54 mit dem Tandemkasten 18 verbunden. Die Planetenräder 48, 50 des ersten Planetenradpaares 42 sind über einen ersten Planetenbolzen 56 des ersten Planetenradpaares 42 miteinander gekoppelt und somit miteinander verbunden.

Das zweite Planetenradpaar 44 umfasst ein drittes Planetenrad 58, welches über jeweilige Verzahnungen mit dem ersten Sonnenrad 36 und mit dem ersten Hohlrad 38 im Eingriff steht. Das zweite Planetenradpaar 44 umfasst auch ein viertes Planetenrad 60, welches über jeweilige Verzahnungen mit dem zweiten Sonnenrad 52 und mit dem zweiten Hohlrad 54 im Eingriff steht. Die Planetenräder 58, 60 sind dabei über einen zweiten Planetenbolzen 62 des zweiten Planetenradpaares 44 miteinander gekoppelt. Entsprechend dazu umfasst auch das dritte Planetenradpaar 46 ein fünftes Planetenrad 64, welches über jeweilige Verzahnungen mit dem ersten Sonnenrad 36 im Eingriff steht. Das dritte Planetenradpaar 46 umfasst auch ein nicht erkennbares, sechstes Planetenrad, welches über jeweilige Verzahnungen mit dem zweiten Sonnenrad 52 und mit dem zweiten Hohlrad 54 im Eingriff steht. Das fünfte Planetenrad 64 und das sechste Planetenrad sind über einen dritten Planetenbolzen 66 miteinander gekoppelt.

Das Doppelplanetengetriebe 22 umfasst auch einen Trabantenkorb 68, an welchem die Planetenräder 48, 50, 58, 60, 64 und das sechste Planetenrad über die zugehörigen Planetenbolzen 56, 62, 66 gelagert sind. Der Trabantenkorb 68 fungiert somit als Planetenträger, an welchem sich die Planetenrad 42, 44, 46 abstützen können. Daraus ist es ersichtlich, dass die Planetenräder 48, 58, 64, das erste Sonnenrad 36 und das erste Hohlrad 38 einem antriebsseitigen, ersten Planetengetriebe des Doppelplanetengetriebes 22 zugeordnet sind, während die Planetenräder 50, 60 und das sechste Planetenrad, das zweite Sonnenrad 52 und das zweite Hohlrad 54 einem abtriebsseitigen, zweiten Planetengetriebe des Doppelplanetengetriebes 22 zugeordnet sind. Dadurch kann das Drehmoment von der Antriebswelle 20 platzsparend und mit einer besonders vorteilhaften Übersetzung auf den Tandemachsantrieb 24 übertragen werden. Des Weiteren ist durch die drehbare Lagerung des Tandemkastens 18 am Achsträger 12 ein Freiheitsgrad geschaffen, sodass dem so genannten Aufstelleffekt der Tandemachse selbsttätig entgegengewirkt werden kann.

Um das Gewicht und die Kosten der Antriebsvorrichtung 10 besonders gering zu halten, ist der Trabantenkorb 68 einstückig ausgebildet. Dadurch weist das Doppelplanetengetriebe 22 eine nur sehr geringe Teileanzahl und einen geringen Montageaufwand auf.

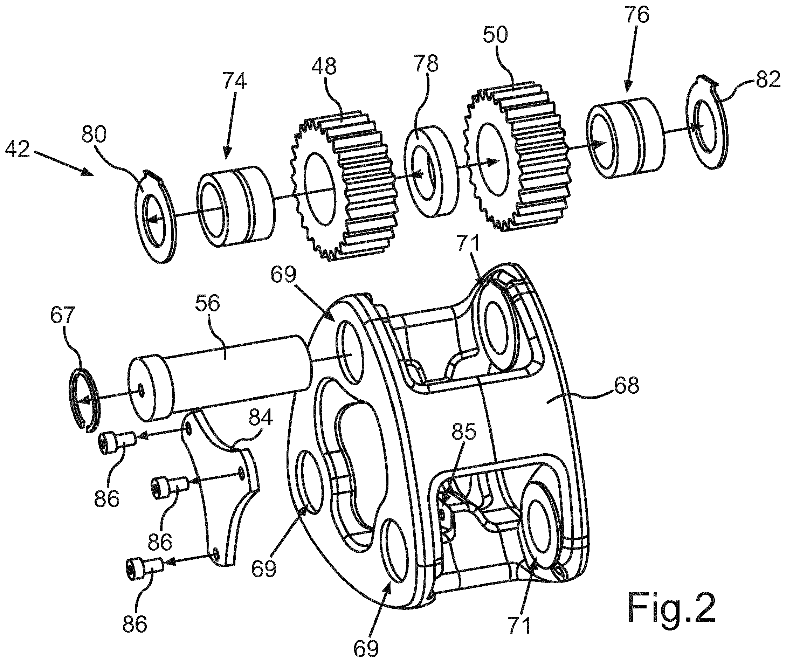

Wie in Zusammenschau mit Fig. 2 und Fig. 3 erkennbar ist, sind die Planetenbolzen 56, 62, 66 mittels eines jeweiligen Sicherungsrings 67, 70, 72 in axialer Richtung am einstückigen bzw. einteiligen Trabantenkorb 68 axial festgelegt. Die Planetenbolzen 56, 62, 66 sind auch drehfest am Trabantenkorb 68 festgelegt.

Zum Festlegen der Planetenbolzen 56, 62, 66 am Trabantenkorb 68 sind jeweilige Aufnahmeöffnungen 69, 71 vorgesehen, wobei die Aufnahmeöffnungen 69 als Durchgangsöffnungen ausgebildet sind, durch die die Planetenbolzen 56, 62, 66 hindurch gesteckt werden können. Zum axialen Festlegen der Planetenbolzen 56, 62, 66 sind die Aufnahmeöffnungen 71 auf einer den Sicherungsringen 67, 70, 72 abgewandten Seite geschlossen. Alternativ ist ein axialer Anschlag für die Planetenbolzen 56, 62, 66 vorgesehen.

Die Planetenräder 48, 50, 58, 60, 64 und das sechste Planetenrad sind mittels eines jeweiligen, zweiteiligen Lagerelements 74, 76 am entsprechenden Planetenbolzen 56, 62, 66 relativ zu diesem und relativ zum Trabantenkorb 68 um eine jeweilige Drehachse drehbar gelagert. Wie anhand von Fig. 1 am Beispiel des ersten Planetenradpaares 42 erkennbar ist, sind die Lagerelemente 74, 76 beispielsweise als Wälzlager ausgebildet. Am Beispiel des ersten Planetenradpaares 42 ist auch erkennbar, dass den Planetenradpaaren 42, 44, 46 ein jeweiliges Anlaufelement in Form eine Anlaufscheibe 78 zugeordnet ist.

Der Übersicht wegen ist in Fig. 2 lediglich das erste Planetenradpaar 42 in einer Explosionsansicht dargestellt. Das zum ersten Planetenradpaar 42 geschilderte kann ohne weiteres auf die anderen Planetenradpaare 44, 46 übertragen werden.

Am Beispiel des ersten Planetenradpaares 42 ist es erkennbar, dass die Anlaufscheibe 78 in axialer Richtung des ersten Planetenbolzens 56 zwischen den Planetenrädern 48, 50 angeordnet ist, sodass sich die Planetenräder 48, 50 in axialer Richtung über die Anlaufscheibe 78 gegenseitig abstützen können. Zum axialen Abstützen der Planetenräder 48, 50 am Trabantenkorb 68 sind auch weitere Anlaufscheiben 80, 82 vorgesehen.

In axialer Richtung zwischen den Sonnenrädern 36, 52 ist ein weiteres Anlaufelement in Form einer weiteren Anlaufscheibe 84 angeordnet, welche zum axialen Abstützen der Sonnenräder 36, 52 sowie zum Zentrieren des Trabantenkorbs 68 zu den Sonnenrädern 36, 52 dient. Die Anlaufscheibe 84 ist dabei mittels Schrauben 86 am Trabantenkorb 68 befestigt.

Zum exakten Positionieren der Anlaufscheibe 84 relativ zum Trabantenkorb 68 weist der Trabantenkorb 68 eine entsprechende Aufnahmeeinrichtung auf, welche beispielsweise Nuten 85 umfasst. In den Nuten 85 kann die Anlaufscheibe 84 zumindest teilweise eingesetzt und so relativ zum Trabantenkorb 68 ausgerichtet werden.

Zur Realisierung einer zeit- und kostengünstigen Herstellung ist der beispielsweise aus einem metallischen Werkstoff gebildete Trabantenkorb 68 als Gussbauteil ausgebildet. Ferner weist der Trabantenkorb 68 gemäß Fig. 1 bis 3 einen Querschnitt auf, welcher im Wesentlichen als Reuleaux-Dreieck mit abgerundeten Ecken ausgebildet ist. Die jeweiligen Drehachsen, um welche die Planetenräder 48, 50, 58, 60, 64 und das sechste Planetenrad relativ zum Trabantenkorb 68 drehbar sind, sind dabei in Umfangsrichtung des Trabantenkorbs 68 gleichmäßig verteilt angeordnet. Dies bedeutet, dass die Drehachsen paarweise in Umfangsrichtung um im wesentlichen den gleichen Winkelbetrag voneinander beabstandet sind.

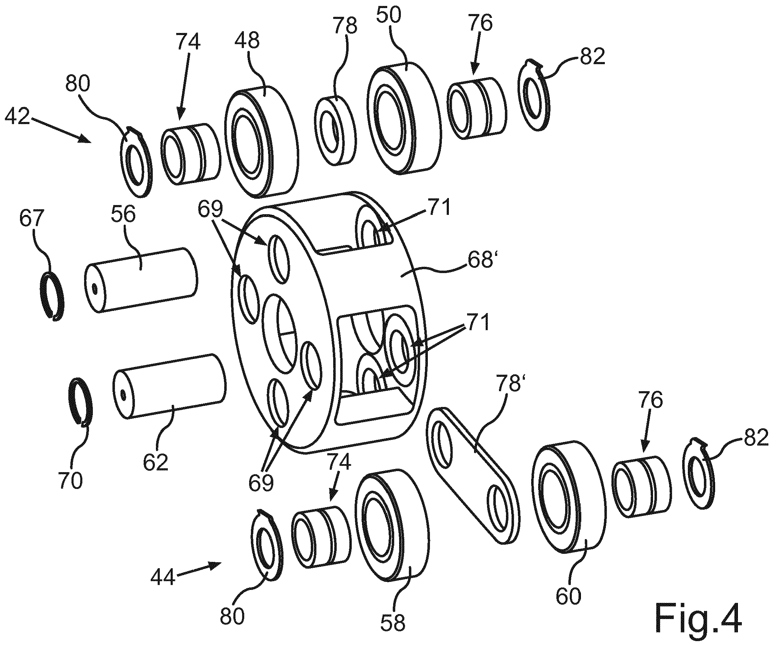

Fig. 4 zeigt eine mit 68' bezeichnete, weitere Ausführungsform des Trabantenkorbs 68. Der Trabantenkorb 68' wird für eine weitere Ausführungsform des Doppelplanetengetriebes 22 verwendet, welches zusätzlich zu den drei Planetenradpaaren 42, 44, 46 ein viertes, nicht dargestelltes Planetenradpaar umfasst. Das vierte Planetenradpaar umfasst entsprechend den ersten drei Planetenradpaaren 42, 44, 46, ein siebtes Planetenrad, welches über jeweilige Verzahnungen mit dem ersten Sonnenrad 36 und mit dem ersten Hohlrad 38 im Eingriff steht. Das vierte Planetenradpaar umfasst ferner ein achtes Planetenrad, welches über jeweilige Verzahnungen mit dem zweiten Sonnenrad 52 und mit dem zweiten Hohlrad 54 im Eingriff steht. Das siebte und das achte Planetenrad sind dabei über einen vierten Planetenbolzen des vierten Planetenradpaares miteinander gekoppelt und über den vierten Planetenbolzen am einstückig ausgebildeten Trabantenkorb 68' gelagert.

Wie Fig. 4 zu entnehmen ist, sind die Anlaufscheiben 78 des zweiten Planetenradpaares 44 und des vierten Planetenradpaares zu einem dem zweiten Planetenradpaar 44 und dem vierten Planetenradpaar gemeinsamen Anlaufelement in Form einer Anlaufscheibe 78' zusammengefasst. Dies bedeutet, dass die einstückige Anlaufscheibe 78' sowohl in axialer Richtung des zweiten Planetenbolzens 62 zwischen dem zweiten Planetenrad 58 und dem dritten Planetenrad 60 als auch in axialer Richtung des vierten Planetenbolzens zwischen dem siebten Planetenrad und dem achten Planetenrad des vierten Planetenradpaares angeordnet ist und somit sowohl zum axialen Abstützen der Planetenräder 58, 60 des zweiten Planetenradpaares 44 sowie zum axialen Abstützen der Planetenräder des vierten Planetenradpaares dient. Darüber hinaus ist auch die Anlaufscheibe 84 zum axialen Abstützen der Sonnenräder 36, 52 in die einstückige Anlaufscheibe 78' integriert. Dies bedeutet, dass die Anlaufscheibe 78' auch zumindest teilweise in axialer Richtung zwischen den Sonnenrädern 36, 52 angeordnet ist und zum axialen Abstützen dieser dient.

## Patentansprüche

1. Antriebsvorrichtung (10) für Tandemachsen eines Fahrzeugs, insbesondere einer selbstfahrenden Arbeitsmaschine, mit einem an einem Rahmen des Fahrzeugs angeordneten Achsträger (12), mit einem am Achsträger (12) relativ zu diesem drehbar gelagerten Tandemkasten (18), mit wenigstens einer Antriebswelle (20) und mit wenigstens einem Doppelplanetengetriebe (22), über welches ein Drehmoment von der Antriebswelle (20) auf einen Tandemachsantrieb (24) übertragbar ist und welches ein mit dem Achsträger (12) verbundenes, erstes Hohlrad (38), wenigstens ein mit dem ersten Hohlrad (38) im Eingriff stehendes, erstes Planetenrad (48), ein mit dem Tandemkasten (18) verbundenes, zweites Hohlrad (54) und wenigstens ein mit dem zweiten Hohlrad (54) im Eingriff stehendes und mit dem ersten Planetenrad (48) über einen Planetenbolzen (56) gekoppeltes, zweites Planetenrad (50) umfasst, wobei die Planetenräder (48, 50) über den Planetenbolzen (56) an einem Trabantenkorb (68, 68') des Doppelplanetengetriebes (22) gelagert sind und wobei das Doppelplanetengetriebe (22) wenigstens ein zweites Planetenradpaar (44) mit einem mit dem ersten Hohlrad (38) im Eingriff stehenden, dritten Planetenrad (58) und mit einem mit dem zweiten Hohlrad (54) im Eingriff stehenden und mit dem dritten Planetenrad (58) über einen zweiten Planetenbolzen (62) des zweiten Planetenradpaares (44) gekoppelten, vierten Planetenrad (60) umfasst,
**dadurch gekennzeichnet,**
**dass** der Trabantenkorb (68, 68') einstückig ausgebildet ist und dass das erste und das zweite Planetenrad (48, 50) und der Planetenbolzen (56) einem ersten Planetenradpaar (42) zugeordnet sind, wobei das dritte und vierte Planetenrad (58, 60) über den zweiten Planetenbolzen (62) an dem einstückigen Trabantenkorb (68, 68') gelagert sind und wobei ein den Planetenradpaaren (42, 44) gemeinsames und in axialer Richtung zwischen den Planetenrädern (48, 50, 58, 60) des jeweiligen Planetenradpaares (42, 44) angeordnetes, einstückig ausgebildetes Anlaufelement (78') zum axialen Abstützen der Planetenräder (48, 50, 58, 60) des jeweiligen Planetenradpaares (42, 44) vorgesehen ist.

2. Antriebsvorrichtung (10) nach Anspruch 1,
**dadurch gekennzeichnet,**
**dass** der Trabantenkorb (68, 68') als Gussbauteil ausgebildet ist.

3. Antriebsvorrichtung (10) nach einem der Ansprüche 1 oder 2,
**dadurch gekennzeichnet,**
**dass** der Trabantenkorb (68, 68') aus einem metallischen Werkstoff, insbesondere aus einem Leichtmetall und insbesondere aus einer Leichtmetalllegierung, gebildet ist.

4. Antriebsvorrichtung (10) nach einem der Ansprüche 1 bis 3,
**dadurch gekennzeichnet,**
**dass** ein mit dem ersten und dem dritten Planetenrad (48, 58) im Eingriff stehendes, erstes Sonnenrad (36) und ein koaxial zum ersten Sonnenrad (36) angeordnetes und mit dem zweiten und dem vierten Planetenrad (50, 60) im Eingriff stehendes, zweites Sonnenrad (52) des Doppelplanetengetriebes (22) vorgesehen ist, wobei das Anlaufelement (78') zum axialen Abstützen der Sonnenräder (36, 52) in axialer Richtung zwischen den Sonnenrädern (36, 52) angeordnet ist.

5. Antriebsvorrichtung (10) nach einem der Ansprüche 1 bis 4,
**dadurch gekennzeichnet,**
**dass** das Doppelplanetengetriebe (22) zusätzlich zu dem ersten und dem zweiten Planetenradpaar (42, 44) ein drittes Planetenradpaar (44) mit einem mit dem ersten Hohlrad (38) im Eingriff stehenden, fünften Planetenrad (64) und einem mit dem zweiten Hohlrad (54) im Eingriff stehenden und mit dem fünftem Planetenrad (64) über einen dritten Planetenbolzen (66) des dritten Planetenradpaares (44) gekoppelten, sechsten Planetenrad umfasst, wobei das fünfte und sechste Planetenrad (64) über den dritten Planetenbolzen (66) an dem einstückigen Trabantenkorb (68, 68') gelagert sind.

6. Antriebsvorrichtung (10) nach Anspruch 5,
**dadurch gekennzeichnet,**
**dass** jeweilige Drehachsen, um welche die Planetenräder (48, 50, 58, 60, 64) des jeweiligen Planetenradpaares (42, 44, 46) drehbar sind, in Umfangsrichtung des Trabantenkorbs (68, 68') gleichmäßig verteilt angeordnet sind.

7. Antriebsvorrichtung (10) nach einem der Ansprüche 5 oder 6,
**dadurch gekennzeichnet,**
**dass** der Trabantenkorb (68, 68') einen Querschnitt aufweist, welcher im Wesentlichen als gleichschenkliges, insbesondere gleichseitiges, Dreieck oder als Reuleaux-Dreieck, insbesondere mit abgerundeten Ecken, ausgebildet ist.

## Claims

1. Drive device (10) for tandem axles of a vehicle, in particular of an automotive working machine, including an axle support (12) disposed at a frame of the vehicle, including a tandem box (18) supported on the axle support (12) rotatable relative to it, including at least one drive shaft (20) and including at least one dual planetary gearing (22), via which a torque can be transferred from the drive shaft (20) to a tandem axle drive (24), and which includes a first ring gear (38) connected to the axle support (12), at least one first planetary gear (48) engaged with the first ring gear (38), a second ring gear (54) connected to the tandem box (18) and at least one second planetary gear (50) engaged with the second ring gear (54) and coupled to the first planetary gear (48) via a planetary bolt (56), wherein the planetary gears (48, 50) are supported on a satellite cage (68, 68') of the dual planetary gearing (22) via the planetary bolt (56), and wherein the dual planetary gearing (22) includes at least one second planetary gear pair (44) with a third planetary gear (58) engaged with the first ring gear (38) and with a fourth planetary gear (60) engaged with the second ring gear (54) and coupled to the third planetary gear (58) via a second planetary bolt (62) of the second planetary gear pair (44),
**characterized in that**
the satellite cage (68, 68') is integrally formed and that the first and the second planetary gear (48, 50) and the planetary bolt (56) are associated with a first planetary gear pair (42), wherein the third and the fourth planetary gear (58, 60) are supported on the integral satellite cage (68, 68') via the second planetary bolt (62) and wherein an integrally formed thrust element (78') common to the planetary gear pairs (42, 44) and arranged in axial direction between the planetary gears (48, 50, 58, 60) of the respective planetary gear pair (42, 44) is provided for axially supporting the planetary gears (48, 50, 58, 60) of the respective planetary gear pair (42, 44).

2. Drive device (10) according to claim 1,
**characterized in that**
the satellite cage (68, 68') is formed as a cast component.

3. Drive device (10) according to any one of claims 1 or 2,
**characterized in that**
the satellite cage (68, 68') is formed of a metallic material, in particular of a light metal and in particular of a light metal alloy.

4. Drive device (10) according to any one of claims 1 to 3,
**characterized in that**
a first sun gear (36) engaged with the first and the third planetary gear (48, 58) and a second sun gear (52) arranged coaxially with the first sun gear (36) and engaged with the second and the fourth planetary gear (50, 60) of the dual planetary gearing (22) are provided, wherein the thrust element (78') is arranged in axial direction between the sun gears (36, 52) for axially supporting the sun gears (36, 52).

5. Drive device (10) according to any one of claims 1 to 4,
**characterized in that**
the dual planetary gearing (22) includes a third planetary gear pair (44) with a fifth planetary gear (64) engaged with the first ring gear (38) and a sixth planetary gear engaged with the second ring gear (54) and coupled to the fifth planetary gear (64) via a third planetary bolt (66) of the third planetary gear pair (44) in addition to the first and the second planetary gear pair (42, 44), wherein the fifth and the sixth planetary gear (64) are supported on the integral satellite cage (68, 68') via the third planetary bolt (66).

6. Drive device (10) according to claim 5,
**characterized in that**
respective rotational axes, around which the planetary gears (48, 50, 58, 60, 64) of the respective planetary gear pair (42, 44, 46) are rotatable, are arranged uniformly distributed in circumferential direction of the satellite cage (68, 68').

7. Drive device (10) according to any one of claims 5 or 6,
**characterized in that**
the satellite cage (68, 68') has a cross-section, which is substantially formed as an isosceles, in particular equilateral, triangle or as a Reuleaux triangle, in particular with rounded corners.

## Revendications

1. Mécanisme d'entraînement (10) pour essieux tandems d'un véhicule, en particulier d'un engin automoteur, avec un support d'essieu (12), agencé sur un châssis du véhicule, avec une boîte tandem (18), montée sur le support d'essieu (12), de manière rotative par rapport à celui-ci, avec au moins un arbre d'entraînement (20) et avec au moins un double engrenage planétaire (22), par l'intermédiaire duquel un couple de rotation peut être transmis par l'arbre d'entraînement (20) à un entraînement d'essieu tandem (24) et duquel une première roue à denture intérieure (38), reliée au support d'essieu (12), comprend au moins une première roue planétaire (48), en prise avec la première roue à denture intérieure (38), une deuxième roue à denture intérieure (54), reliée à la boîte tandem (18) et au moins une deuxième roue planétaire (50), en prise avec la deuxième roue à denture intérieure (54) et couplée avec la première roue planétaire (48) par l'intermédiaire d'un boulon planétaire (56), les roues planétaires (48, 50) étant montées, par l'intermédiaire du boulon planétaire (56), sur un carter extérieur (68, 68') du double engrenage planétaire (22) et le double engrenage planétaire (22) comprenant au moins une deuxième paire de roues planétaires (44) avec une troisième roue planétaire (58), en prise avec la première roue à denture intérieure (38) et avec une quatrième roue planétaire (60), en prise avec la deuxième roue à denture intérieure (54) et couplée avec la troisième roue planétaire (58) par l'intermédiaire d'un deuxième boulon planétaire (62) de la seconde paire de roues planétaires (44),
**caractérisé en ce que**
le carter extérieur (68, 68') est constitué d'un seul tenant et que la première et la deuxième roue planétaire (48, 50) et le boulon planétaire (56) sont affectés à une première paire de roues planétaires (42), la troisième et la quatrième roue planétaire (58, 60) étant montées, par l'intermédiaire du deuxième boulon planétaire (62), sur le carter extérieur (68, 68') d'un seul tenant et un élément de butée (78'), constitué d'un seul tenant, commun aux paires de roues planétaires (42, 44) et agencé dans le sens axial entre les roues planétaires (48, 50, 58, 60) de la paire de roues planétaires (42, 44) respective, pour un support axial des roues planétaires (48, 50, 58, 60) de la paire de roues planétaires (42, 44) respective, étant prévu.

2. Mécanisme d'entraînement (10) selon la revendication 1,
**caractérisé en ce que**
le carter extérieur (68, 68') est constitué en tant que composant coulé.

3. Mécanisme d'entraînement (10) selon l'une des revendications 1 ou 2,
**caractérisé en ce que**
le carter extérieur (68, 68') est formé dans un matériau métallique, en particulier dans un métal léger et en particulier dans un alliage de métaux légers.

4. Mécanisme d'entraînement (10) selon l'une des revendications 1 à 3,
**caractérisé en ce**
**qu'**une première roue solaire (36), en prise avec la première et la troisième roue planétaire (48, 58) et une deuxième roue solaire (52), agencée de manière coaxiale par rapport à la première roue solaire (36) et en prise avec la deuxième et la quatrième roue planétaire (50, 60), du double engrenage planétaire (22) est prévue, l'élément de butée (78') étant agencé, pour le support axial des roues solaires (36, 52) dans le sens axial, entre les roues solaires (36, 52).

5. Mécanisme d'entraînement (10) selon l'une des revendications 1 à 4,
**caractérisé en ce que**
le double engrenage planétaire (22) comprend, en plus de la première et de la deuxième paire de roues planétaires (42, 44), une troisième paire de roues planétaires (44), avec une cinquième roue planétaire (64), en prise avec la première roue à denture intérieure (38) et une sixième roue planétaire, en prise avec la deuxième roue à denture intérieure (54) et couplée avec la cinquième roue planétaire (64) par l'intermédiaire d'un troisième boulon planétaire (66) de la troisième paire de roues planétaires (44), la cinquième et sixième roue planétaire (64) étant montées, par l'intermédiaire du troisième boulon planétaire (66), sur le carter extérieur (68, 68') d'un seul tenant.

6. Mécanisme d'entraînement (10) selon la revendication 5,
**caractérisé en ce que**
des axes de rotation respectifs, autour desquels peuvent tourner les roues planétaires (48, 50, 58, 60, 64) de la paire de roues planétaires (42, 44, 46) respective, sont agencés, répartis régulièrement, dans le sens circonférentiel du carter extérieur (68, 68').

7. Mécanisme d'entraînement (10) selon l'une des revendications 5 ou 6,
**caractérisé en ce que**
le carter extérieur (68, 68') présente une section, qui est constituée essentiellement en tant que triangle isocèle, en particulier équilatéral ou en tant que triangle de Reuleaux, en particulier avec des angles arrondis.
